# EUROPÄISCHE PATENTSCHRIFT

(11) **EP 0 583 655 B1**
(45) Veröffentlichungstag und Bekanntmachung des Hinweises auf die Patenterteilung: **24.04.1996**
(21) Anmeldenummer: 93111974.7
(22) Anmeldetag: 28.07.1993
(51) Int. Cl.: B64F 5/00

(54) **Flugzeug-Arbeitsdock**
Aircraft-repair dock
Hangar de réparation d'avion

(30) Priorität: 11.08.1992 DE 4226501
(43) Veröffentlichungstag der Anmeldung: 23.02.1994
(73) Patentinhaber: Fahrion, Otmar, D-70806 Kornwestheim (DE)
(72) Erfinder: Fahrion, Otmar, D-70806 Kornwestheim (DE)
(74) Vertreter: Ostertag, Reinhard

(56) Entgegenhaltungen:
- DE-A- 2 344 867
- DE-A- 3 720 239
- DE-A- 4 100 648
- US-A- 4 614 002

## Beschreibung

Die Erfindung betrifft ein Dock zum Durchführen von Arbeiten an einem Flugzeug gemäß dem Oberbegriff des Anspruches 1.

Ein derartiges Dock ist in der DE-OS 41 00 648 beschrieben.

Durch die vorliegende Erfindung soll ein Dock gemäß dem Oberbegriff des Anspruches 1 so weitergebildet werden, daß die Arbeitsbühnen zwischen den jeweils eine Dockhälfte bildenden Tragfachwerken ausgetauscht werden können.

Diese Aufgabe ist erfindungsgemäß gelöst durch ein Dock gemäß Anspruch 1.

Bei dem erfindungsgemäßen Dock können die auf den verschiedenen Tragschlitten vorgesehenen Führungsbahnen für Basisabschnitte von Arbeitsbühnen jeweils an den Stoßstellen der Tragfachwerke in eine fluchtende, eine durchgehende Schienenverbindung herstellende Stellung bewegt werden. Damit kann eine einzige Arbeitsbühne im Prinzip über die gesamte Länge des Docks verfahren werden.

Man kann also ein Dock zunächst mit einer geringeren Anzahl von Arbeitsbühnen (eine oder zwei) ausrüsten, um zunächst Kosten zu sparen (die Arbeitsbühnen haben einen mechanisch aufwendigen Aufbau und stellen einen erheblichen Anteil der Gesamtkosten des Docks dar). Darüber hinaus kann man zusammen mit den auf einer Arbeitsbühne befindlichen Werkzeugen und Materialien von einem Arbeitsplatz am Flugzeug zu einem weit entfernten Arbeitsplatz am Flugzeug fahren, ohne diese Werkzeuge und Materialien in eine andere Arbeitsbühne umzuladen und möglicherweise auch noch eine gewisse Strecke auf dem Boden der Halle, in welchem das Dock aufgestellt ist, zu bewegen.

Vorteilhafte Weiterbildungen der Erfindung sind in Unteransprüchen angegeben.

Die Weiterbildung der Erfindung gemäß Anspruch 2 ist im Hinblick auf explosionsgeschütztes Arbeiten von Vorteil. Die Energiezufuhr zum Antriebsmotor einer Arbeitsbühne erfolgt ohne Schleifkontakte, und trotzdem ist gewährleistet, daß die Arbeitsbühne von einem Tragschlitten auf einen auf Stoß benachbart gestellten Tragschlitten fahren kann.

Bei einem Dock gemäß Anspruch 3 ist gewährleistet, daß die Arbeitsbühne beim Überwechseln von einem Tragschlitten auf einen anderen jeweils wieder mit den notwendigen Arbeitsfluids versorgt ist.

Bei einem Dock gemäß Anspruch 4 kann jeweils leicht verfolgt werden, auf welchem der Tragschlitten sich welche Arbeitsbühne befindet. Es ist im Hinblick auf eine automatisierte Überwachung der Arbeitsbühnenstellung zur Vermeidung von Kollisionen mit dem Flugzeug ebenso von Vorteil wie für ein numerisch gesteuertes Bewegen der Arbeitsbühnen längs in einem Steuerrechner abgelegter Höhenlinien des Flugzeuges.

Auch die Weiterbildung der Erfindung gemäß Anspruch 5 ist im Hinblick auf die Stellungskontrolle und ein automatisches Anfahren aufeinanderfolgender Arbeitsstellungen der Arbeitsbühnen von Vorteil.

Bei einem Dock gemäß Anspruch 6 erfolgt auch die Übertragung der Signale der Stellungsgeber zuverlässig und ohne Kontaktprobleme.

Ein Dock gemäß Anspruch 7 ist mit einer automatischen Kollisionsüberwachung zwischen Arbeitsbühnen und Flugzeug versehen, die zusätzlich zu normalerweise an den Arbeitsbühnen vorgesehenen Abstandssensoren verwendet wird. Letztere treten dann aber nur als letzte Notmaßnahme in Aktion, während der die Iststellung einer Arbeitsbühne mit den Höhenlinien der Flugzeugkontur überprüfende Steuerrechner schon vorab eine sich abzeichnende Kollision erkennen kann und entsprechende Maßnahmen treffen kann.

Üblicherweise haben Arbeitsbühnen eines Docks zum Durchführen von Arbeiten an einem Flugzeug jeweils eine Besatzung von mindestens zwei Mann, wovon der eine ausschließlich für das Steuern der Arbeitsbühne zuständig ist, während der andere Arbeiten am Flugzeug durchführt. Bei einem Dock gemäß Anspruch 8 kann man den die Steuerung der Arbeitsbühne besorgenden Mann einsparen, da der Steuerrechner nach einer einmaligen Lernfahrt weitere Fahrten am gleichen Flugzeugtyp ohne Steuerperson durchführen kann.

Für manche Arbeiten an einem Flugzeug ist es notwendig, von einem Flurfahrzeug getragene Arbeitsbühnen zu haben. Mit der Weiterbildung der Erfindung gemäß Anspruch 9 wird erreicht, daß eine von einem Flurfahrzeug getragene Arbeitsbühne im Bedarfsfalle auch auf einen von einem Tragfachwerk des Docks getragenen Tragschlitten überwechseln kann. Dies ist wiederum im Hinblick auf das Kleinhalten der insgesamt benötigten Anzahl von Arbeitsbühnen, aber auch im Hinblick auf ein einfaches Wechseln des Arbeitsplatzes zusammen mit Werkzeugen und Arbeitsmitteln von Vorteil.

Die Weiterbildung der Erfindung gemäß Anspruch 10 ist im Hinblick auf besonders hohe Stabilität und Spielfreiheit der die Arbeitsbühne tragenden Strebenanordnung von Vorteil.

Die Weiterbildung der Erfindung gemäß Anspruch 11 bringt nochmals eine Verbesserung der Spielfreiheit und Belastbarkeit bei solchen Strebenanordnungen, die in eine weitauskragende Konfiguration ausfahrbar sind. Dies ist deshalb wünschenswert, da man insbesondere für Lackierarbeiten einen großen Abstand zwischen dem Flugzeugrumpf und den Tragfachwerken wünscht, um um das Flugzeug herum einen möglichst ungestörten Luftstrom von oben nach unten führen zu können, der Lacknebel und Verunreinigungen mitnimmt.

Mit der Weiterbildung der Erfindung gemäß Anspruch 12 wird eine besonders gute Abstützung und Führung der Stützpunkte des Scherengestänges auf der Stützschiene bei leichter Beweglichkeit des Scherengestänges gewährleistet.

An einem Flugzeug gibt es verschiedene nur schwach geneigte Flächen, z.B. die Oberflächen der Tragflügel, die vom Rumpf aus nach außen und vorne leicht schräg ansteigen, oder auch die Beplankung des Seitenleitwerkes, die nach oben schwach ansteigt. Um in diesen Bereichen einen konstanten Abstand zwischen Arbeitsbühne und Außenhaut des Flugzeuges einzuhalten, muß eine manuelle Steuerung der Arbeitsbühne sehr sorgfältig erfolgen. Bei einem Dock gemäß Anspruch 13 braucht man den Tragschlitten, der der betrachteten Arbeitsbühne zugeordnet ist, nur in einer Koordinaten zu steuern.

Um ein Flugzeug in einem Dock, welches seitliche Tragfachwerke aufweist, ein- und ausdocken zu können, muß ein dem Tragflächenbereich zugeordnetes Tragfachwerk in seitlicher Richtung verfahrbar sein. Wählt man gemäß Anspruch 14 die Laufrichtung dieses Tragfachwerkes so, daß es sich nicht exakt senkrecht zur Docklängsrichtung sondern im wesentlichen gemäß der Tragflügelachse bewegt, so kann man die den Tragflügel umgebende große Ausnehmung dieses Tragfachwerkes und auch das Tragfachwerk insgesamt kleiner wählen. Ein möglichst kleines und dem Verlauf der Tragfläche nachfahrendes Tragfachwerk ist deshalb von Interesse, weil man so im Dock die Tragfläche besonders gut verfolgen kann und gleichzeitig bis in unmittelbare Nähe der Flügelwurzeln eine Verfahrbarkeit der Arbeitsbühnen auch unter die Rumpfmitte hat. Darüber hinaus hat dieses öfter bewegte Tragfachwerk kleinere Masse. Die oben genannten Vorteile werden mit nur unwesentlich erhöhtem Aufwand erhalten, da es in der Praxis fast kostenneutral ist, ob die Laufräder und die mit ihm zusammenarbeitenden Schienen exakt senkrecht zur Docklängsachse oder hierzu unter einem Winkel von mehr als 90° angestellt vorgesehen werden.

Die Weiterbildung der Erfindung gemäß Anspruch 15 ist wiederum in Hinblick auf das Erzeugen eines ungestörten Luftvorhanges um das Flugzeug herum von Vorteil.

Nachstehend wird die Erfindung anhand von Ausführungsbeispielen unter Bezugnahme auf die Zeichnung näher erläutert. In dieser zeigen:
- Figur 1:: einen schematischen Schnitt in der Längsmittelebene einer mit einem Dock ausgerüsteten Wartungshalle für Flugzeuge, wobei ein solches gestrichelt angedeutet ist;
- Figur 2:: eine Aufsicht auf ein ähnliches Dock ohne Heckbühne;
- Figur 3:: eine Aufsicht auf eine Strebenanordnung zum Tragen einer Arbeitsbühne eines Flugzeugdocks;
- Figur 4:: eine seitliche Ansicht der Strebenanordnung nach Figur 3;
- Figur 5:: eine schematische Darstellung eines teleskopierbaren Laufsteges zum Abdecken der Strebenanordnung nach den Figuren 3 und 4;
- Figur 6:: eine schematische Darstellung eines Flurfahrzeuges mit einer Arbeitsbühne, die auf ein gebäudefestes Tragfachwerk eines Docks überwechseln kann; und
- Figur 7:: eine schematische Darstellung der Energieversorgung, Stellungsmessung und Steuerung für eine der Arbeitsbühnen des docks.

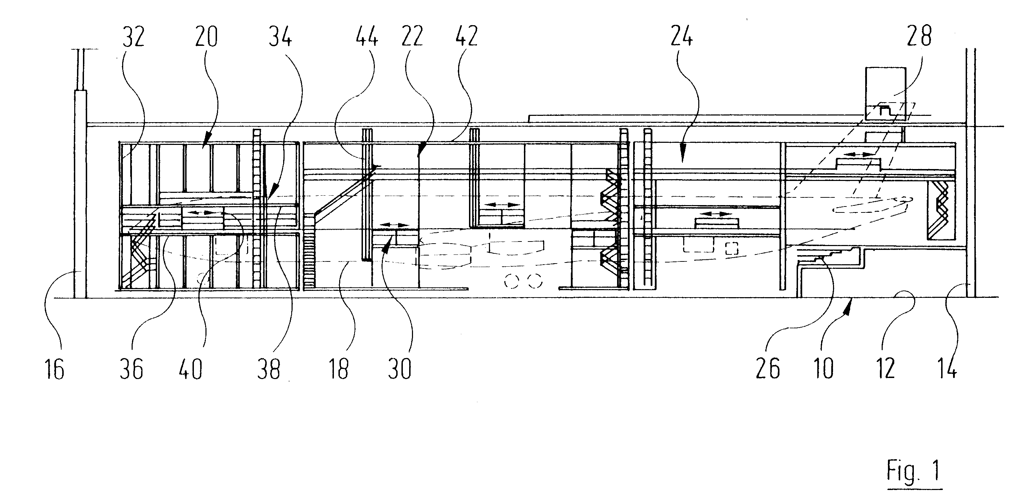

In Figur 1 ist eine Wartungshalle 10 für Flugzeuge wiedergegeben, die einen Boden 12, eine Rückwand 14 sowie ein Tor 16 aufweist.

Ein Flugzeug, an welchem Wartungsarbeiten oder Lackierarbeiten durchgeführt werden sollen, ist bei 18 gestrichelt angedeutet.

Um einen guten Zugang zur Außenhaut des Flugzeuges zu gewährleisten, ist in der Wartungshalle ein Dock aufgestellt, welches spiegelbildlich zur Zeichenebene ausgebildet ist und ein dem Bug und dem benachbarten Rumpfabschnitt zugeordnetes vorderes Tragfachwerk 20, ein dem Flügelbereich zugeordnetes mittleres Tragfachwerk 22 sowie ein dem hinter dem Flügel liegenden Rumpfabschnitt zugeordnetes hinteres Tragfachwerk 24 aufweist. Diese Tragfachwerke sind in zur Zeichenebene senkrechter Richtung bewegbar, wobei die Tragfachwerke 20 und 22 so weit seitlich nach außen verstellbar sind, daß die Tragfläche des Flugzeuges 18 ungehindert vorbeilaufen kann.

Dem Heckbereich des Flugzeuges 18 ist eine insgesamt mit 26 bezeichnete Heckbühne zugeordnet, die der Rumpfunterseite folgt, und im Bereich des Seitenleitwerkes ist an der Halle direkt ein weiteres Tragfachwerk 28 befestigt.

An den Tragfachwerken sind jeweils insgesamt mit 30 bezeichnete Arbeitsbühnen angebracht, die in horizontaler und vertikaler Richtung bewegbar sind, wie durch Pfeile angedeutet, und zusätzlich durch eine Strebenanordnung senkrecht zur Zeichenebene bewegt werden können.

Beim Tragfachwerk 20 ist an vertikalen Ständern 32 ein Tragschlitten 34 vertikal verschiebbar geführt, der seinerseits Führungsschienen 36, 38 aufweist, in denen ein Basisabschnitt 40 für die zugeordnete Arbeitsbühne 30 verschiebbar ist.

Eine ähnliche Anordnung ist für das Tragfachwerk 24 gewählt.

Das Tragfachwerk 22, welches im Tragflügelbereich arbeiten muß, kann dort keine bis zum Hallenboden reichenden vertikalen Ständer aufweisen. Aus diesem Grunde hat man dort eine starke obere horizontale Führungsschiene 42, auf welcher Träger 44 laufen. An diesen hängt jeweils wieder vertikal einstellbar ein Tragschlitten 34, der in der oben beschriebenen Art und Weise die zugeordnete Arbeitsbühne 30 haltert.

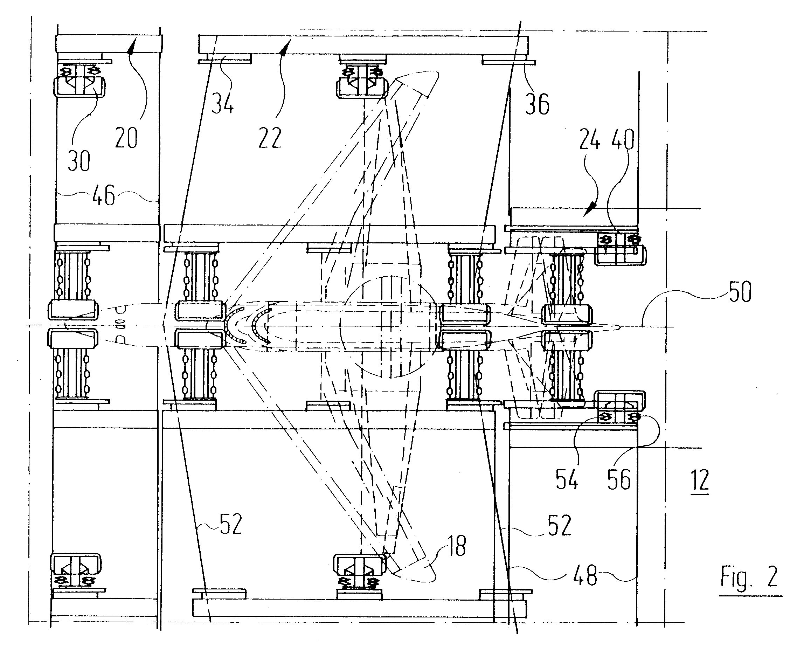

Wie aus Figur 2 ersichtlich, sind in den Boden 12 Schienen 46 und 48 für da vordere Radfachwerk 20 und das hintere Tragfachwerk 24 eingelassen, die exakt senkrecht zur mit 50 bezeichneten Docklängsachse verlaufen. Schienen 52 für das mittlere Tragfachwerk 22 sind dagegen unter einem Winkel von etwa 105° zur Docklängsachse angestellt und entsprechen so dem mittleren Einstellwinkel der Tragflügel unterschiedlicher Flugzeugtypen.

Wie ebenfalls aus Figur 2 ersichtlich, sind die Arbeitsbühnen 30 über jeweils zwei Scherengestänge 54, 56 mit dem zugeordneten Basisabschnitt 40 verbunden, der wie oben dargelegt, horizontal verschiebbar im zugeordneten Tragschlitten 34 läuft.

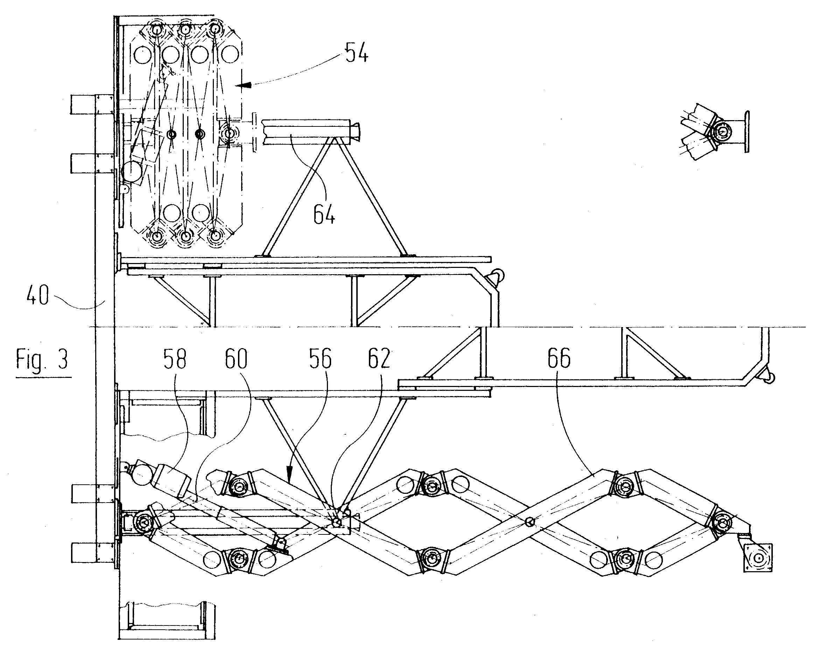

Wie aus Figur 3 ersichtlich, ist zum Ein- und Ausfahren der Scherengestänge 54, 56 jeweils ein Elektromotor 58 vorgesehen, der auf eine Gewindestrebe 60 arbeitet. In Figur 3 ist das obere Scherengestänge 54 im eingefahrenen Zustand, das untere Scherengestänge 56 im ausgefahrenen Zustand wiedergegeben.

Die mittleren Gelenkpunkte 62 der Scherengestänge 54, 56 tragen in der Zeichnung nicht wiedergegebene Rollenanordnungen, die aus einer um eine horizontale Achse umlaufenden Stützrolle und zwei seitlichen, um vertikale Achsen umlaufenden Führungsrollen bestehen. Dieser Rollenkopf arbeitet mit einer Stützschiene 64 zusammen, die ein nach oben offenes C-Profil ist. Auf diese Weise ist das voll ausgefahrene Scherengestänge zusätzlich beim ersten mittleren Gelenkpunkt noch abgestützt. Beim Einlaufen des Scherengestänges laufen die anderen Gelenkpunkte mit ihren Rollenköpfen ebenfalls auf die Stützschiene 64 auf.

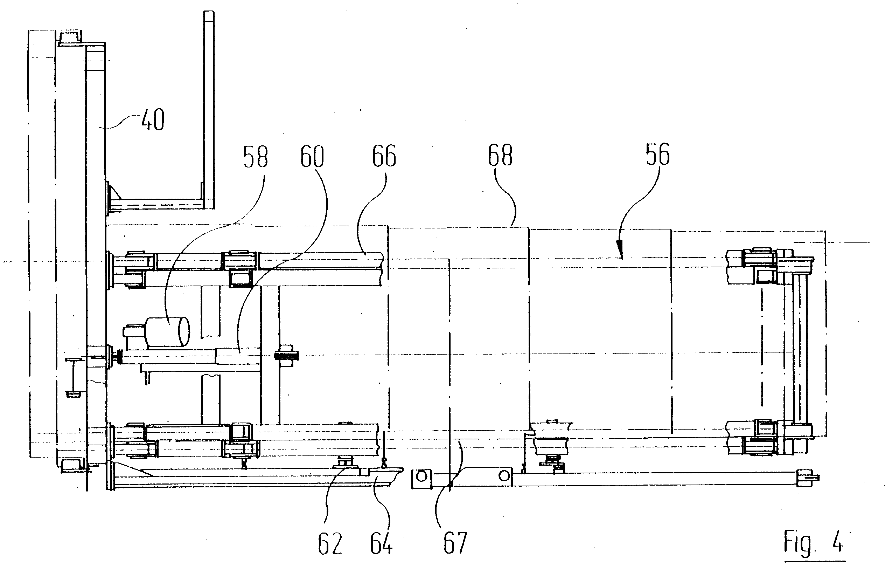

Figur 4 zeigt, daß jedes der Scherengestänge 54, 56 aus einer oberen Schere 66 und einer unteren Schere 68 besteht. Hierdurch wird eine hohe mechanische Belastbarkeit und Spielfreiheit der Scherengestänge 54, 56 erhalten.

In Figur 4 ist ferner gestrichelt ein teleskopierbarer Laufboden 68 wiedergegeben, über den man von einem auf dem Basisabschnitt 40 angeordneten festen Laufsteg auf die von den beiden Scherengestängen 54, 56 getragene Arbeitsbühne gelangen kann.

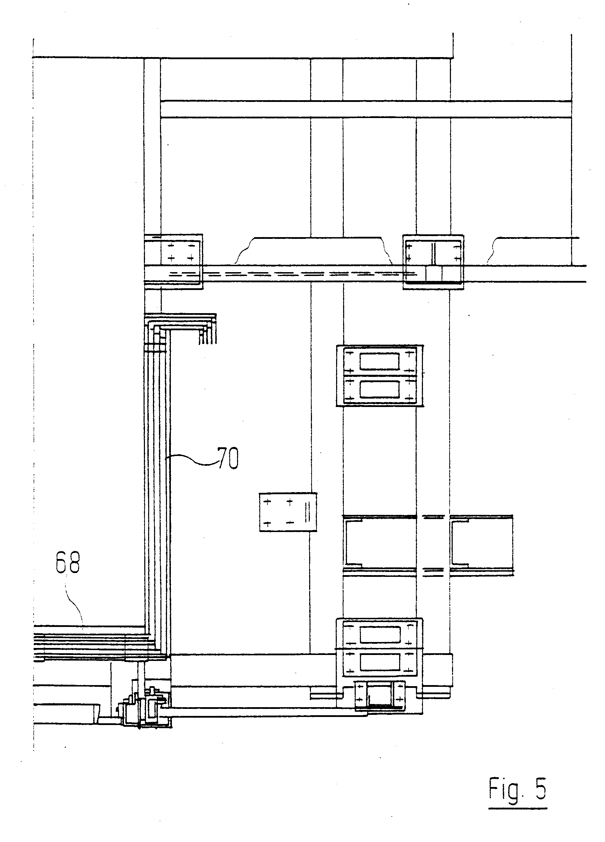

Wie aus Figur 5 ersichtlich, ist dem teleskopierbaren Laufboden 68 ein teleskopierbares Geländer 70 zugeordnet.

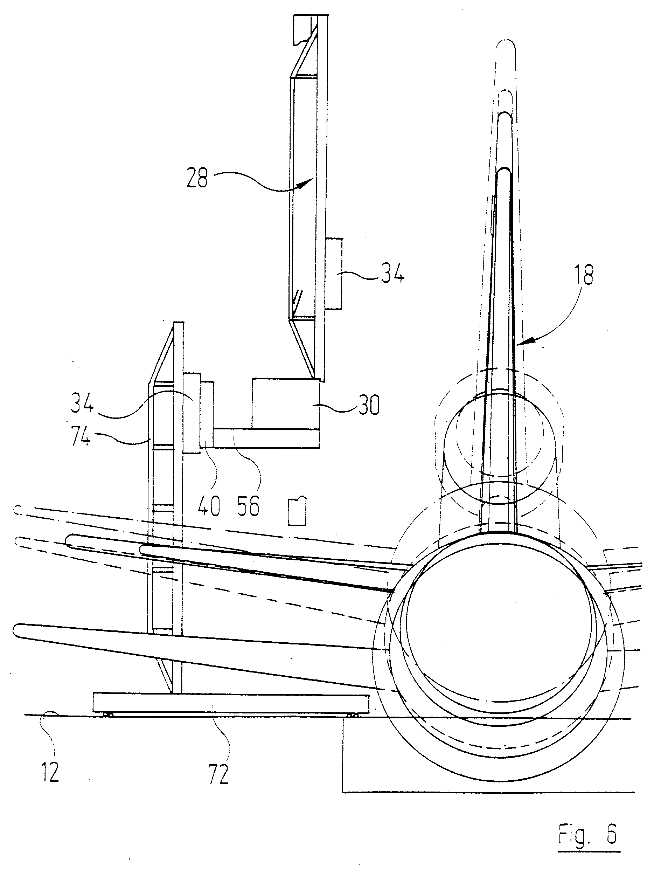

In Figur 6 ist ein Flurfahrzeug 72 wiedergegeben, das ein Tragfachwerk 74 trägt. An diesem ist vertikal verfahrbar wieder ein Tragschlitten 34 angebracht, der wieder eine Arbeitsbühne 30 über einen Basisabschnitt 40 trägt.

Der vom Flurfahrzeug 72 getragene Tragschlitten kann durch das Flurfahrzeug in eine Stellung bewegt werden, in welcher er mit der Vertikalführung des Tragfachwerkes 28 fluchtet, und in dieser Stellung kann der Basisabschnitt 40 der zugeordneten Arbeitsbühne in einen Tragschlitten 34 bewegt werden, der auf dem Tragfachwerk 28 vorgesehen ist. Es versteht sich, daß die vom Flurfahrzeug 72 getragene Arbeitsbühne im Bedarfsfalle gleichermaßen auch auf eines der Tragfachwerke 20-24 übergeben werden kann oder von dort übernommen werden kann.

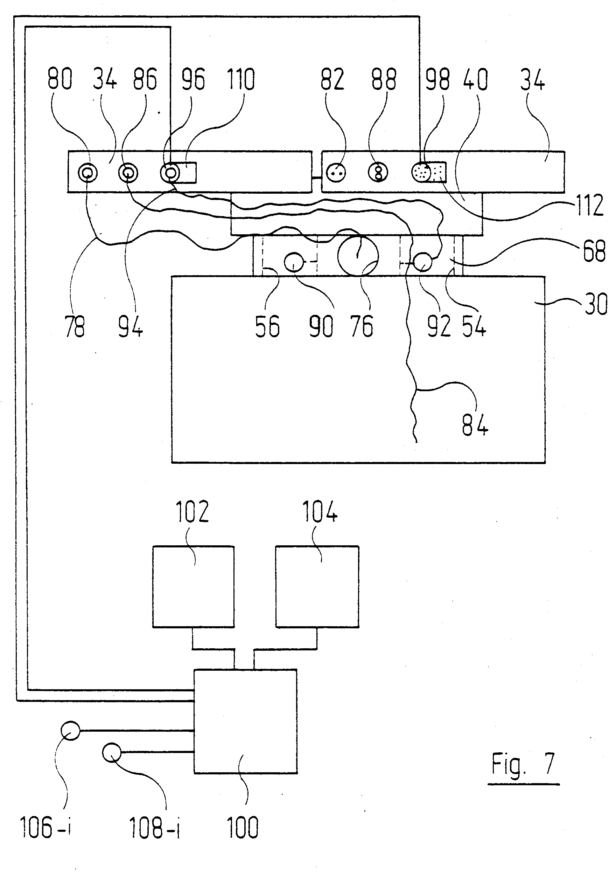

Wie aus Figur 7 ersichtlich, haben die einzelnen Basisabschnitte 40 jeweils einen Elektroantrieb 76, um die Arbeitsbühnen in horizontaler Richtung auf den Tragschlitten 34 zu verfahren. Der Anschluß dieser Elektroantriebe an Schlepp-Speiseleitungen erfolgt über Kabel 78 mit Steckern 80, die in auf den Tragschlitten vorgesehene Steckdosen 82 eingesteckt werden. Die Länge der Kabel 78 ist so bemessn, daß ein Basisabschnitt 40 vollständig von einem Tragschlitten auf einen auf Stoß benachbart gestellten anderen Tragschlitten gefahren werden kann. Anschließend wird dann der Stecker 80 gezogen und in die Steckdose 82 des benachbarten Tragschlittens gesteckt.

Die Versorgung einer Arbeitsbühne mit Druckluft und gegebenenfalls Unterdruck und gegebenenfalls Hydrauliköl erfolgt ähnlich über ein Kabel 84 mit einem Stecker 86, der in eine Fluidsteckdose 88 eines Tragschlittens einführbar ist.

Zur Messung der momentanen Länge der Scherengestänge 54, 56 sind Stellungsgeber 90, 92 vorgesehen. Deren Ausgangssignale werden gegebenenfalls zusammen mit weiteren Datensignalen (auf der Arbeitsbühne angeordnetes Terminal zum Verkehr mit einem zentralen Steuerungsrechner) über ein weiteres Kabel 94 mit einem Stecker 96 und eine auf dem Tragschlitten vorgesehene Steckdose 98 an einen zentralen Steuerungsrechner 100 übermittelt. Dieser kann aus den Ausgangssignalen der Stellungsgeber 90, 92 die Lage des Mittelpunktes der Arbeitsbühne 30 sowie deren Anstellwinkel zur Docklängsachse berechnen.

Der Steuerungsrechner 100 arbeitet mit einem Massenspeicher 102 zusammen, in welchem die Form des jeweils im Dock befindlichen Flugzeuges in Form von Höhenlinien abgespeichert sind, die in unterschiedlichem vertikalem Abstand vom Hallenboden durch die Flugzeughaut gelegt sind.

Der Steuerungsrechner 100 kann so jeweils überprüfen, ob die Gefahr einer Kollision der Arbeitsbühne mit dem Flugzeug besteht. In diesem Falle kann er dann denjenigen der verschiedenen Koordinatenantriebe zum Bewegen der Arbeitsbühne anhalten, der bei weiterer Erregung eine Kollision mit dem Flugzeug herbeiführen würde.

Der Steuerungsrechner 100 enthält ferner einen Bahnspeicher 104, in dem in einem Lernmodus des Steuerungsrechners 100 die Ausgangssignale der Stellungsgeber 90, 92 sowie weiterer nur schematisch angedeuteter Stellungsgeber 106-i, 108-i für die Vertikal- und Horizontalstellung der verschiedenen Tragschlitten 34-i abgespeichert wird, wenn die Arbeitsbühne in einem Lernzyklus manuell so bewegt wird, wie dies zur Durchführung spezieller Arbeiten am Flugzeug benötigt wird. Die so gewonnene Bahnkurve kann für spätere Arbeitszyklen dann als Sollkurve verwendet werden.

Die Stecker 96 sind mit einem Ansatz 110 versehen, der mit einer die jeweilige Arbeitsbühne identifizierende Markierung versehen ist, z.B. in lochkartenähnlicher Form. Ähnlich haben die Steckdosen 98 Ansätze 112, die mit einem entsprechenden Markenleser versehen sind. Das Ausgangssignal dieses Markenlesers wird zusammen mit den über das Kabel 94 erhaltenen Daten an den Steuerungsrechner 100 weitergegeben, der somit weiß, wo sich welche Arbeitsbühne befindet und welche Tragschlitten-Koordinaten den Ausgangssignalen der Stellungsgeber 90, 92 jeweils hinzuzuaddieren sind.

## Patentansprüche

1. Dock zum Durchführen von Arbeiten an einem Flugzeug (18), mit zu beiden Seiten des Rumpfes angeordneten Tragfachwerken (20-24, 28), von denen zumindest ausgewählte so weit verfahrbar sind, daß die Tragflächenspitzen des Flugzeuges an ihnen vorbeilaufen können, mit auf den Tragfachwerken in vertikaler Richtung und/oder horizontaler Richtung verfahrbaren Tragschlitten (34) und mit über jeweils eine längeneinstellbare Strebenanordnung (54, 56) an den Tragschlitten (34) angebrachten Arbeitsbühnen (30), die durch die Strebenanordnung (54, 56) in zur Bewegungsebene der Tragschlitten (34) im wesentlichen senkrechter Richtung verstellbar sind, dadurch gekennzeichnet, daß die Tragschlitten (34) Führungsbahnen (36, 38) aufweisen, in welchen Basisabschnitte (40) für die Strebenanordnungen (54, 56) laufen und daß die Führungsbahnen (36, 38) benachbarter Tragschlitten (34) in eine fluchtende, im wesentlichen durchgehende Stellung bewegbar sind.

2. Dock nach Anspruch 1, dadurch gekennzeichnet, daß die Basisabschnitte (40) jeweils einen Antriebsmotor (76) zum Bewegen des Basisabschnittes in den Führungsbahnen (36, 38) aufweisen und über ein lösbares Versorgungskabel (78) mit einer Steckdose (82) verbindbar sind, durch welche der Antriebsmotor (76) mit Energie versorgt wird und daß die Länge der Versorgungskabel (78) und die Lage der Steckdosen (82) auf zwei zusammengefahrenen Tragschlitten (34) so aufeinander abgestimmt sind, daß die Basisabschnitte (40) über die Stoßstelle der zusammengefahrenen Tragschlitten (34) gefahren werden kann.

3. Dock nach Anspruch 2, dadurch gekennzeichnet, daß die Basisabschnitte (40) über lösbare Speiseschläuche (84) mit Steckdosen (88) für Arbeitsfluids verbindbar sind und daß die Länge der Verbindungsschläuche und die Lage der Fluid-Steckdosen (88) auf zwei zusammengefahrenen Tragschlitten (34) so aufeinander abgestimmt sind, daß die Basisabschnitte (40) über die stoßstelle zwischen zusammengefahrenen Tragschlitten (34) gefahren werden können.

4. Dock nach einem der Ansprüche 1-3, dadurch gekennzeichnet, daß die Basisabschnitte (40) oder die Arbeitsbühnen (30) maschinell lesbare Identifizierungsmarken (110) tragen und die Tragschlitten Lesegeräte (112) für diese Identifizierungsmarken aufweisen.

5. Dock nach einem der Ansprüche 1-4, dadurch gekennzeichnet, daß den Strebenanordnungen (54, 56) Stellungsgeber (90, 92) zugeordnet sind und ferner Stellungsgeber (106-i, 108-i) für die Vertikalstellung und die Horizontalstellung der Tragschlitten (34) vorgesehen sind.

6. Dock nach Anspruch 5, dadurch gekennzeichnet, daß die den Strebenanordnungen (54, 56) zugeordneten Stellungsgeber (90, 92) über ein lösbares Datenkabel (94) mit Steckdosen (98) verbindbar sind, die ihrerseits mit einem Steinerungsrechner (100) verbunden sind, und daß die Länge der Datenkabel (94) und die Lage der zugehörigen Steckdosen (98) auf zwei zusammengefahrenen Tragschlitten (34) so aufeinander abgestimmt sind, daß die Basisabschnitte (40) über die Stoßstelle zwischen zusammengefahrenen Tragschlitten (34) hinweggefahren werden können.

7. Dock nach Anspruch 5 oder 6, dadurch gekennzeichnet, daß der Steuerungsrechner (100) mit einem Massenspeicher (102) zusammenarbeitet, in welchem die Form des im Dock befindlichen Flugzeuges (18) in Form eines Satzes von Höhenlinien abgelegt ist, und daß der Rechner die Antriebe für die Horizontalbewegung und die Vertikalbewegung der Tragschlitten (34) und die Antriebe (58) für die Längenverstellung der Strebenanordnung (54, 56) anhält, wenn der Rand einer Arbeitsbühne (30) der zur momentanen Höhe der Arbeitsbühne gehörigen Höhenlinie im Massenspeicher (102) näher kommt als ein vorgegebener Mindestabstand.

8. Dock nach einem der Ansprüche 5-7, dadurch gekennzeichnet, daß der Steuerungsrechner (100) die bei einer manuell gesteuerten Bewegung der Arbeitsbühne (30) erhaltenen Ausgangssignale der verschiedenen Stellungsgeber in einem Bahnspeicher (104) ablegt und als Sollwerte für einen späteren Bewegungszyklus bereitstellt.

9. Dock nach einem der Ansprüche 1-8, dadurch gekennzeichnet, daß ein Flurfahrzeug (72) mit einem Tragfachwerk (74) und einem hierauf laufenden Tragschlitten (34) mit Führungsbahnen (36, 38) für einen Basisabschnitt (40) einer einstellbaren Strebenanordnung (54, 56) für eine Arbeitsbühne (30) versehen ist und sein Tragschlitten in eine Stellung bewegbar ist, in welcher dessen Führungsbahnen mit Führungsbahnen eines von einem Dock-Tragfachwerk (28) getragenen Tragschlittens (34) fluchten.

10. Dock nach einem der Ansprüche 1-9, dadurch gekennzeichnet, daß die Strebenanordnungen Scherengestänge (54, 56) mit jeweils zwei vertikal beabstandete Scheren (66, 67) aufweisen.

11. Dock nach Anspruch 10, dadurch gekennzeichnet, daß an den Basisabschnitten (40) jeweils eine Stützschiene (64) angebracht ist, deren freies Ende bei eingefahrener Arbeitsbühne (30) noch unter letzterer liegt und welche zumindest den innersten Gelenkpunkt des zugeordneten Scherengestänges (54, 56) abstützt.

12. Dock nach Anspruch 11, dadurch gekennzeichnet, daß die Stützschienen (64) nach oben offene C-Profile sind und mit den Stützschienen (64) zusammenarbeitende Punkte der Scherengestänge (54, 56) mit einer auf dem Boden des Profiles laufenden um eine horizontale Achse umlaufenden Stützrolle sowie mit mit den Schenkeln des Profiles zusammenarbeitenden um eine vertikale Achse umlaufenden Führungsrollen versehen sind.

13. Dock nach einem der Ansprüche 1-12, dadurch gekennzeichnet, daß ein Vertikalführungsrahmen oder ein Tragschlitten, der im Flügelbereich oder Leitwerksbereich des Flugzeuges (18) eingesetzt wird, gemäß der Schrägstellung der Flugzeughaut in diesem Bereich ständig gekippt ist oder in seiner Neigung entsprechend einstellbar ist.

14. Dock nach einem der Ansprüche 1-13, dadurch gekennzeichnet, daß Laufräder desjenigen Tragfachwerkes (22), welches dem Flügelbereich des Flugzeuges (18) zugeordnet ist, und Schienen (52) für diese Laufräder unter einem Winkel von mehr als 90° zur Docklängsachse (50) angestellt sind.

15. Dock nach einem der Ansprüche 1-14, dadurch gekennzeichnet, daß der Boden der Arbeitsbühnen (30) und Laufböden (68), die über den einstellbaren Strebenanordnungen (54, 56) vorgesehen sind, als Gitter ausgebildet sind.

## Claims

1. A dock for carrying out work on an aircraft (18), having support frameworks (20-24, 28) which are disposed on either side of the fuselage and of which at least selected frameworks are movable far enough to allow the wing tips of the aircraft to run past them, having support slides (34) which are movable in a vertical and/or horizontal direction on the support frameworks, and having work platforms (30) which are mounted in each case via a length-adjustable strut arrangement (54, 56) on the support slides (34) and are movable by the strut arrangement (54, 56) in a direction substantially perpendicular to the plane of motion of the support slides (34), wherein the support slides (34) have guideways (36, 38), in which bottom sections (40) for the strut arrangements (54, 56) run, and wherein the guideways (36, 38) of adjacent support slides (34) are movable into an aligned, substantially continuous position.

2. A dock as claimed in claim 1, wherein the bottom sections (40) each have a drive motor (76) for moving the bottom section in the guideways (36, 38) and are connectable via a detachable supply cable (78) to a receptacle outlet (82), by means of which the drive motor (76) is supplied with energy, and wherein the length of the supply cables (78) and the position of the receptacle outlets (82) on two support slides (34) which have been moved together are so adapted to one another that the bottom sections (40) may be moved over the joint of the abutting support slides (34).

3. A dock as claimed in claim 2, wherein the bottom sections (40) are connectable via detachable supply tubes (84) to receptacle outlets (88) for working fluids, and wherein the length of the connection tubes and the position of the fluid receptacle outlets (88) on two support slides (34) which have been moved together are so adapted to one another that the bottom sections (40) may be moved over the joint between abutting support slides (34).

4. A dock as claimed in one of claims 1 to 3, wherein the bottom sections (40) or the work platforms (30) carry mechanically readable identification marks (110) and the support slides have reader units (112) for said identification marks.

5. A dock as claimed in one of claims 1 to 4, wherein position transducers (90, 92) are associated with the strut arrangements (54, 56) and further position transducers (106-i, 108-i) are provided for the vertical position and the horizontal position of the support slides (34).

6. A dock as claimed in claim 5, wherein the position transducers (90, 92) associated with the strut arrangements (54, 56) are connectable via a detachable data cable (94) to receptacle outlets (98) which are in turn connected to a control computer (100), and wherein the length of the data cables (94) and the position of the associated receptacle outlets (98) on two support slides (34) which have been moved together are so adapted to one another that the bottom sections (40) may be moved across the joint between abutting support slides (34).

7. A dock as claimed in claim 5 or 6, wherein the control computer (100) cooperates with a background memory (102), in which the shape of the aircraft (18) situated in the dock is stored in the form of a set of contour lines, and wherein the computer stops the drives for the horizontal movement and the vertical movement of the support slides (34) and the drives (58) for the longitudinal displacement of the strut arrangement (54, 56) if the edge of a work platform (30) comes closer than a preset minimum clearance to the contour line in the background memory (102) associated with the instantaneous height of the work platform.

8. A dock as claimed in one of claims 5 to 7, wherein the control computer (100) stores the output signals of the various position transducers received during a manually controlled movement of the work platform (30) in a path memory (104) and loads them as setpoint values for a subsequent cycle of motions.

9. A dock as claimed in one of claims 1 to 8, wherein a floor vehicle (72) is provided with a support framework (74) and, running on said framework, a support slide (34) with guideways (36, 38) for a bottom section (40) of an adjustable strut arrangement (54, 56) for a work platform (30), and the support slide of the floor vehicle is movable into a position in which its guideways are aligned with guideways of a support slide (34) carried by a dock support framework (28).

10. A dock as claimed in one of claims 1 to 9, wherein the strut arrangements have scissor-type linkages (54, 56) with in each case two vertically spaced-apart scissors (66, 67).

11. A dock as claimed in claim 10, wherein mounted on each of the bottom sections (40) is a support rail (64), whose free end - when the work platform (30) is retracted - still lies below said platform and which supports at least the innermost hinge point of the associated scissor-type linkage (54, 56).

12. A dock as claimed in claim 11, wherein the support rails (64) are upwardly open C-sections, and points of the scissor-type linkages (54, 56) which cooperate with the support rails (64) are provided with a supporting roller, which runs on the bottom of the section and rotates about a horizontal axis, as well as with guide rollers, which cooperate with the limbs of the section and rotate about a vertical axis.

13. A dock as claimed in one of claims 1 to 12, wherein a vertical guide frame or a support slide, which is used in the wing region or the tail unit region of the aircraft (18), is continuously tilted according to the inclination of the aircraft skin in said region or its slope is correspondingly adjustable.

14. A dock as claimed in one of claims 1 to 13, wherein running wheels of the support framework (22), which is associated with the wing region of the aircraft (18), and rails (52) for said running wheels are set at an angle of more than 90° relative to the dock longitudinal axis (50).

15. A dock as claimed in one of claims 1 to 14, wherein the floor of the work platforms (30) and walkways (68) provided above the adjustable strut arrangements (54, 56) take the form of grids.

## Revendications

1. Dock pour effectuer des travaux sur un avion (18), comprenant des structures porteuses en treillis (20-24, 28) disposées de part et d'autre du fuselage, dont au moins certaines peuvent être déplacées pour que les extrémités des surfaces portantes puissent passer devant elles, comprenant également des chariots porteurs (34) pouvant être déplacés verticalement et/ou horizontalement sur les structures porteuses, et des plates-formes de travail (30) fixées aux chariots porteurs (34) par le biais d'un bras (54, 56) réglable en longueur, qui peuvent être déplacées par les bras (54, 56) essentiellement perpendiculairement au plan de déplacement des chariots porteurs (34), caractérisé en ce que les chariots porteurs (34) présentent des glissières (36, 38) dans lesquelles se déplacent des parties de base (40) pour les bras (54, 56), et en ce que les glissières (36, 38) de chariots porteurs adjacents (34) peuvent être déplacées pour être en alignement et former une glissière ininterrompue.

2. Dock selon la revendication 1, caractérisé en ce que les parties de base (40) présentent chacune un moteur de commande (76) pour déplacer les parties de base dans les glissières (36, 38) et peuvent être reliées à une prise de courant (82) par le biais d'un câble d'alimentation amovible (78) permettant d'alimenter le moteur de commande (76) en énergie, et en ce que la longueur des câbles d'alimentation (78) et la position des prises de courant (82) sur deux chariots porteurs (34) réunis sont coordonnées de telle manière que les parties de base (40) puissent passer sur le point de jonction des chariots porteurs (34) réunis.

3. Dock selon la revendication 2, caractérisé en ce que les parties de base (40) peuvent être reliées par le biais de tuyaux souples d'alimentation amovibles (84) à des prises (88) pour fluides, et en ce que la longueur des tuyaux souples de raccordement et la position des prises pour fluides (88) sur deux chariots porteurs (34) réunis sont coordonnées de telle manière que les parties de base (40) puissent passer sur le point de jonction des chariots porteurs (34) réunis.

4. Dock selon l'une des revendications 1 à 3, caractérisé en ce que les parties de base (40) ou les plates-formes de travail (30) portent des marques d'identification (110) pouvant être lues de façon mécanisée, et en ce que les chariots porteurs présentent des appareils de lecture (112) pour ces marques d'identification.

5. Dock selon l'une des revendications 1 à 4, caractérisé en ce que des indicateurs de position (90, 92) sont associés aux bras (54, 56), et en ce que sont prévus en outre des indicateurs de position (106-i, 108-i) pour la position verticale et horizontale des chariots porteurs (34).

6. Dock selon la revendication 5, caractérisé en ce que les indicateurs de position (90, 92) associés aux bras (54, 56) peuvent être reliés par le biais d'un câble de données (94) à des prises (98) qui sont elles-mêmes reliées à un ordinateur de commande (100), et en ce que la longueur des câbles de données (94) et la position des prises (98) qui leur sont associées sur deux chariots porteurs (34) réunis sont coordonnées de telle manière que les parties de base (40) puissent passer sur le point de jonction des chariots porteurs (34) réunis.

7. Dock selon la revendication 5 ou 6, caractérisé en ce que l'ordinateur de commande (100) coopère avec une mémoire de grande capacité (102) dans laquelle est mémorisée la forme de l'avion (18) qui se trouve dans le dock sous la forme d'un ensemble de courbes de niveau, et en ce que l'ordinateur coupe les commandes pour le déplacement horizontal et vertical des chariots porteurs (34) et les commandes (58) pour le réglage de la longueur du bras (54, 56) lorsque le bord d'une plate-forme de travail (30) s'approche davantage de la courbe de niveau associée dans la mémoire à grande capacité (102) à la hauteur momentanée de la plate-forme de travail qu'une distance minimale préalablement définie.

8. Dock selon l'une des revendications 5 à 7, caractérisé en ce que l'ordinateur de commande (100) enregistre dans une mémoire de trajectoire (104) les signaux de sortie des différents indicateurs de position émis lors d'un déplacement manuel de la plate-forme de travail (30) et les met à disposition en tant que valeurs de consigne pour un cycle de déplacement ultérieur.

9. Dock selon l'une des revendications 1 à 8, caractérisé en ce qu'un véhicule au sol (72) est muni d'une structure porteuse en treillis (74) et d'un chariot porteur (34) se déplaçant sur celle-ci, qui est muni de glissières (36, 38) pour une partie de base (40) d'un bras réglable (54, 56) pour une plate-forme de travail (30), et en ce que son chariot porteur peut être mis dans une position dans laquelle ses glissières sont en alignement avec des glissières d'un chariot porteur (34) porté par une structure porteuse en treillis (28) d'un dock.

10. Dock selon l'une des revendications 1 à 9, caractérisé en ce que les bras présentent une tringlerie en ciseaux (54, 56) avec chaque fois deux ciseaux (66, 67) espacés verticalement.

11. Dock selon la revendication 10, caractérisé en ce qu'aux parties de base (40) est chaque fois fixé un rail d'appui (64) dont l'extrémité libre, lorsque la plate-forme de travail (30) est rentrée, se situe encore sous cette dernière et qui supporte au moins le point d'articulation le plus à l'intérieur de la tringlerie en ciseaux (54, 56) qui lui est associée.

12. Dock selon la revendication 11, caractérisé en ce que les rails d'appui (64) sont des profilés en C ouverts vers le haut, et en ce que des points de la tringlerie en ciseaux (54, 56) qui coopèrent avec les rails d'appui (64) sont munis d'un galet d'appui tournant autour d'un axe horizontal et se déplaçant sur le sol et de galets de guidage tournant autour d'un axe vertical et coopérant avec les ailes du profilé.

13. Dock selon l'une des revendications 1 à 12, caractérisé en ce qu'un cadre de guidage vertical ou un chariot porteur qui est mis en oeuvre dans la zone des ailes ou de l'empennage de l'avion (18) est, en fonction de l'inclinaison du revêtement de l'avion, basculé en permanence dans cette zone ou incliné en conséquence.

14. Dock selon l'une des revendications 1 à 13, caractérisé en ce que des galets de déplacement de la structure porteuse en treillis (22) qui est associée à la zone des ailes de l'avion (18) et des rails (52) pour ces galets sont inclinés avec un angle supérieur à 90° par rapport à l'axe longitudinal (50) du dock.

15. Dock selon l'une des revendications 1 à 14, caractérisé en ce que le plancher des plates-formes de travail (30) et des planchers de déplacement (68) qui sont prévus au-dessus des bras réglables (54, 56) sont réalisés sous la forme de grilles.
